# EUROPEAN PATENT APPLICATION

(11) **EP 4 618 591 A1**
(43) Date of publication of application: **17.09.2025**
(21) Application number: 23888510.7
(22) Date of filing: 26.10.2023
(51) Int. Cl.: H04R 3/00, G10H 1/00

(54) **INFORMATION PROCESSING DEVICE, INFORMATION PROCESSING METHOD, AND PROGRAM**

(30) Priority: 07.11.2022 JP 2022178390
(71) Applicant: Sony Group Corporation, Tokyo 108-0075 (JP)
(72) Inventor: SAGANO, Masayuki, Tokyo 108-0075 (JP); KAWANO, Jiro, Tokyo 108-0075 (JP); HORA, Keiko, Tokyo 108-0075 (JP); MATSUI, Takeshi, Tokyo 108-0075 (JP); KASAHARA, Tomoharu, Tokyo 108-0075 (JP); YOSHIDA, Yuya, Tokyo 108-0075 (JP); ITO, Rena, Tokyo 108-0075 (JP); FUJIOKA, Takashi, Tokyo 108-0075 (JP)
(74) Representative: D Young & Co LLP
(86) International application number: PCT/JP2023/038615
(87) International publication number: WO 2024/101162

(57) **Abstract**

An information processing apparatus includes: a control unit configured to be able to execute an application having a data recording function and an editing function of sound source data; and a display unit that displays visual information related to the application. Furthermore, in a case where the sound source data to be subjected to audio quality enhancement is selected by a user via the application, the control unit executes audio quality enhancement processing of the sound source data. The control unit executes parameter adjustment processing of the sound source data in parallel with the audio quality enhancement processing, and performs control to perform overlap display of a parameter adjustment component of the parameter adjustment processing in a waveform display area of the sound source data, which is displayed on the display unit during execution of the recording/editing application.

## Description

### Field

The present disclosure relates to an information processing apparatus, an information processing method, and a program.

### Background

In recent years, the spread of portable information processing apparatuses such as smartphones and tablet terminals is remarkable. In addition, in these portable information processing apparatuses, the performance of the processing capability is rapidly improved, and the user can easily produce various media contents such as music and video by an individual using such an information processing apparatus.

Application software (application) for recording and editing that operates in an information processing apparatus is known for production of music content. The user can perform editing work of sound source data recorded by the information processing apparatus or purchased from the outside with a high degree of freedom using such an application.

In addition, some applications for recording and editing enable editing of sound source data recorded by a plurality of information processing apparatuses via a network, thereby supporting production of music content by a plurality of users in cooperation (see, for example, Patent Literature 1).

### Citation List

### Patent Literature

Patent Literature 1: WO 2019/102730 A

### Summary

### Technical Problem

However, the above-described conventional technology has room for further improvement in order to further improve convenience when the user produces the music content.

Therefore, the present disclosure proposes an information processing apparatus, an information processing method, and a program capable of improving convenience when a user produces music content.

### Solution to Problem

In order to solve the above problems, one aspect of an information processing apparatus according to the present disclosure includes: a control unit configured to be able to execute an application having a data recording function and an editing function of sound source data; and a display unit that displays visual information related to the application. The control unit executes audio quality enhancement processing of the sound source data to be subjected to audio quality enhancement when the sound source data to be subjected to audio quality enhancement has been selected by the user via the application, executes parameter adjustment processing of the sound source data in parallel with the audio quality enhancement processing, and causes a parameter adjustment component in the parameter adjustment processing to be displayed in a form of an overlap display onto a waveform display area of the sound source data, the area being displayed on the display unit during the execution of the application.

### Brief Description of Drawings

FIG. 1 is a schematic diagram (part 1) of an information processing method according to an embodiment of the present disclosure.
FIG. 2 is a diagram illustrating contents of audio quality enhancement processing.
FIG. 3 is a diagram illustrating contents of parameter adjustment processing.
FIG. 4 is a schematic diagram (part 2) of an information processing method according to an embodiment of the present disclosure.
FIG. 5 is a block diagram illustrating a configuration example of a smartphone according to the embodiment of the present disclosure.
FIG. 6 is a block diagram illustrating a configuration example of a server apparatus according to the embodiment of the present disclosure.
FIG. 7 is a diagram (part 1) illustrating a basic UI example.
FIG. 8 is a diagram (part 2) illustrating a basic UI example.
FIG. 9 is a diagram (part 3) illustrating a basic UI example.
FIG. 10 is a diagram (part 1) illustrating a UI example at the time of muting.
FIG. 11 is a diagram (part 2) illustrating a UI example at the time of muting.
FIG. 12 is a diagram (part 1) illustrating a UI example on a recording screen.
FIG. 13 is a diagram (part 2) illustrating a UI example on the recording screen.
FIG. 14 is a diagram illustrating a UI example at comping editing.
FIG. 15 is a diagram (part 1) illustrating a UI example at the time of timing control with the audio quality enhancement processing.
FIG. 16 is a diagram (part 2) illustrating a UI example at the time of timing control with the audio quality enhancement processing.
FIG. 17 is a diagram (part 3) illustrating a UI example at the time of timing control with the audio quality enhancement processing.
FIG. 18 is a diagram (part 4) illustrating a UI example at the time of timing control with the audio quality enhancement processing.
FIG. 19 is a diagram (part 1) illustrating a UI example according to a modification.
FIG. 20 is a diagram (part 2) illustrating a UI example according to a modification.
FIG. 21 is a diagram (part 3) illustrating a UI example according to a modification.
FIG. 22 is a diagram (part 4) illustrating a UI example according to a modification.
FIG. 23 is a diagram (part 5) illustrating a UI example according to a modification.
FIG. 24 is a diagram (part 6) illustrating a UI example according to a modification.
FIG. 25 is a diagram (part 7) illustrating a UI example according to a modification.
FIG. 26 is a diagram (part 8) illustrating a UI example according to a modification.
FIG. 27 is a diagram (part 9) illustrating a UI example according to a modification.
FIG. 28 is a hardware configuration diagram illustrating an example of a computer that implements functions of a smartphone.

### Description of Embodiments

Embodiments of the present disclosure will be described below in detail with reference to the drawings. In each of the following embodiments, the same parts are denoted by the same reference symbols, and a repetitive description thereof will be omitted.

Furthermore, the following will describe an exemplary case where an information processing apparatus according to the embodiment (hereinafter, appropriately denoted as the "present embodiment") of the present disclosure is a smartphone 10 used by a user. Hereinafter, the recording/editing application operating on the smartphone 10 is referred to as a "recording/editing application".

In addition, hereinafter, sound source data recorded by the smartphone 10 or purchased from the outside and stored in storage of the smartphone 10 will be appropriately denoted as a "track".

Furthermore, in the following, the function of enhancing the audio quality of the track in the recording/editing application according to the present embodiment will be referred to as an audio quality enhancement function. The audio quality enhancement function may be illustrated as "Studio tuning" or "STUDIO TUNING" in the drawings to be described below. In addition, processing executed by the audio quality enhancement function is referred to as "audio quality enhancement processing".

Furthermore, hereinafter, a function of adjusting various parameters such as the volume of each track and the intensity of the reverb for reproducing and mixing tracks in the recording/editing application according to the present embodiment will be referred to as a parameter adjustment function. "Mixing" includes writing out sound source data including mixed tracks. In addition, processing executed by the parameter adjustment function is referred to as "parameter adjustment processing".

The present disclosure will be described in the following order.
1. Overview
2. Configuration example of smartphone
3. Configuration example of server apparatus
4. Various UI examples at execution of parameter adjustment processing
4-1. Basic examples
4-2. Muting
4-3. Recording screen
4-4. Comping editing
4-5. Timing control with audio quality enhancement processing
5. Modification
5-1. First modification
5-2. Second modification
5-3. Third modification
5-4. Fourth modification
5-5. Fifth modification
5-6. Sixth modification
6. Hardware configuration
7. Conclusion

### <<1. Overview>>

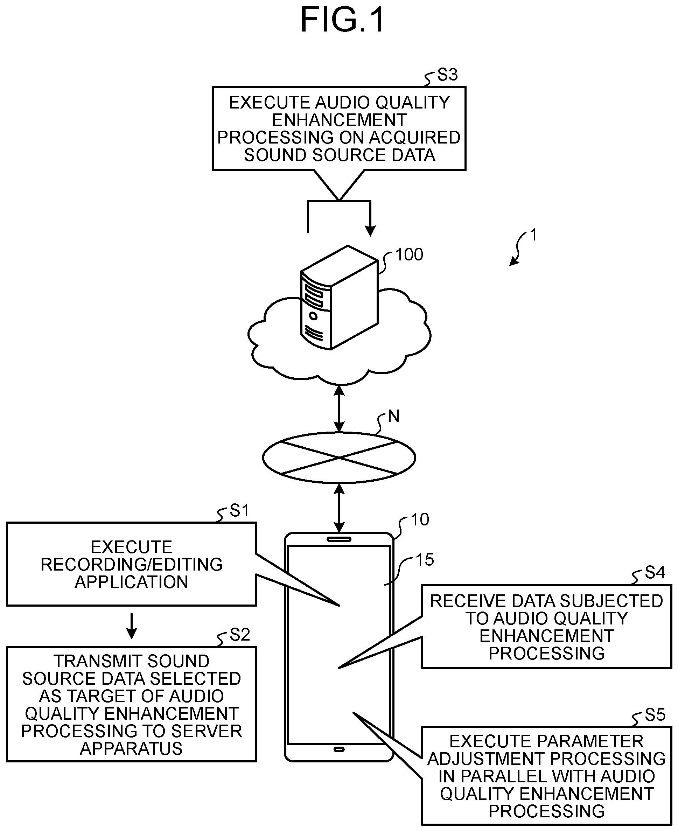

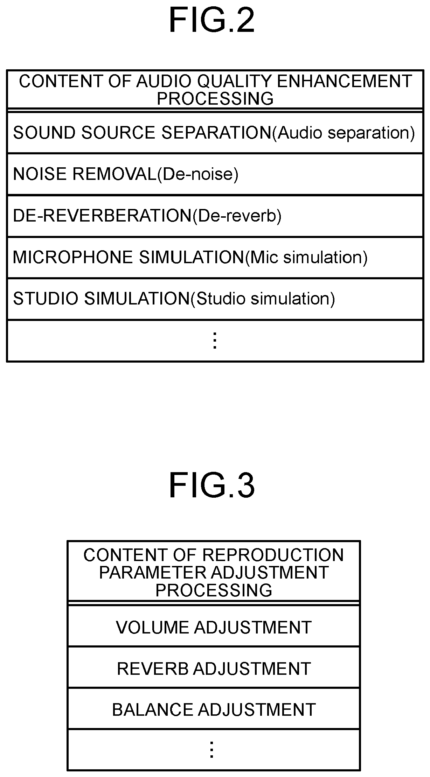

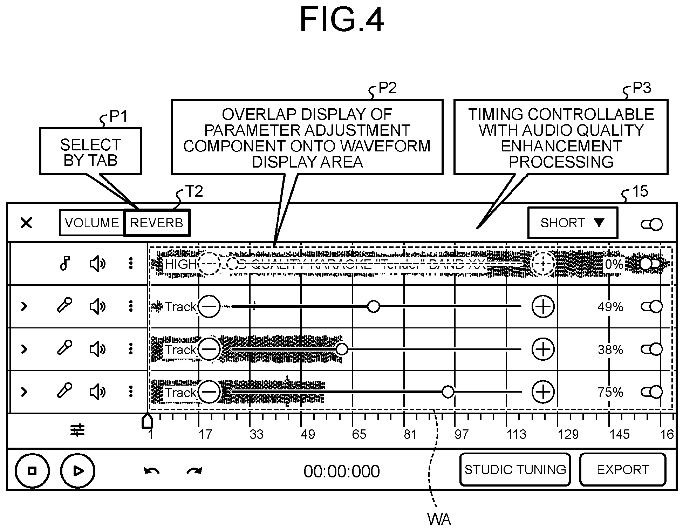

FIG. 1 is a schematic diagram of an information processing method according to the embodiment of the present disclosure. FIG. 2 is a diagram illustrating contents of audio quality enhancement processing. FIG. 3 is a diagram illustrating contents of parameter adjustment processing. FIG. 4 is a schematic diagram (part 2) of an information processing method according to an embodiment of the present disclosure.

The information processing method according to the present embodiment is executed by an information processing system 1. As illustrated in FIG. 1, the information processing system 1 includes a smartphone 10 and a server apparatus 100.

The smartphone 10 is a mobile information processing apparatus used by the user. The smartphone 10 has a platform capable of executing the recording/editing application according to the present embodiment.

As illustrated in FIG. 1, the smartphone 10 includes a microphone 11, a speaker 12, and a display unit 15. The microphone 11 is located at one end close to a mouthpiece in the longitudinal direction of the smartphone 10. The speaker 12 is provided at the other end close to the earpiece with respect to the one end.

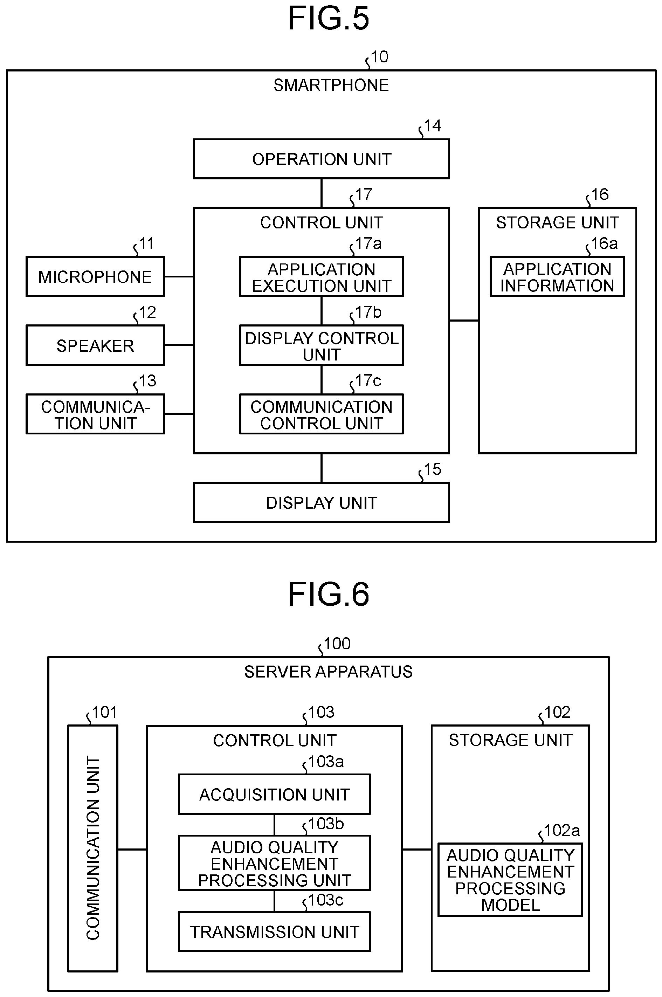

The display unit 15 is implemented as a touch screen integrated with an operation unit 14 (refer to FIG. 5) to be described below, and has a rectangular shape. The touch screen detects a touch operation of the user. Examples of the detection method of the touch screen include known methods such as a capacitance method, a resistive film method, a surface acoustic wave method (or an ultrasonic method), an infrared method, an electromagnetic resonance method, and a load detection method.

In a case where the recording/editing application is running on the smartphone 10, the touch screen displays various User Interfaces (UI). In addition, the touch screen detects a touch operation of the user on the UI.

Furthermore, in a case where an operation to start recording is performed in the recording/editing application, the microphone 11 collects a sound emitted from a sound source (for example, a musical instrument) and records the collected sound as sound source data of a predesignated track type in the recording. Furthermore, when an operation of reproducing the sound source data is performed in the recording/editing application, the speaker 12 outputs the selected sound source data in reproduction.

At the time of reproduction or mixing, it is possible, with the recording/editing application, to adjust various parameters such as the volume and the intensity of reverb of each track according to the user's operation.

Meanwhile, the conventional recording/editing application has room for further improvement in order to further improve convenience in music content production by the user.

As described above, in recent years, a mobile information processing apparatus such as the smartphone 10 has been rapidly improved in processing capability, making it possible for the user to easily create music content by an individual using a recording/editing application. In addition, along with this, there are more opportunities for the user to disclose the created music content to services such as a social network service (SNS) and a video distribution service, for example.

For this reason, in recent years, there is an increasing demand for audio quality enhancement of music content created by the user. Examples of "audio quality enhancement" include, as illustrated in FIG. 2, processing such as "sound source separation" of separating a plurality of different sound sources included in a recorded track using one microphone 11, "noise removal" of removing noise, and "de-reverberation" for removing unnecessary reverberation. Other examples include, as illustrated in FIG. 2, "microphone simulation" of reproducing a microphone characteristic of a high-performance microphone, and "studio simulation" of adding a unique reverberation of a place such as a recording studio.

In addition, there is an increasing need for not only audio quality enhancement but also operability enhancement in the above-described parameter adjustment. Examples of the "parameter adjustment" include, as illustrated in FIG. 3, "volume adjustment" of adjusting the volume of each track, "reverb adjustment" of adjusting the intensity of the reverb, and "balance adjustment" of adjusting the balance of each track. Hereinafter, "balance" may be denoted as "LR".

Conventional recording/editing applications have a problem of insufficient expansion on the parameter adjustment function in particular, among audio quality enhancement function and the parameter adjustment function. In particular, when the recording/editing application is used in a device such as the smartphone 10 having the display unit 15 smaller than a display of a typical personal computer, there is room for improvement in operability of the parameter adjustment function.

Therefore, in the information processing method according to the present embodiment, while enabling the smartphone 10 to execute parameter adjustment processing in parallel with audio quality enhancement processing, the parameter adjustment component in the parameter adjustment processing is displayed in the form of overlap display in a waveform display area WA of the track displayed on the display unit 15 during execution of the recording/editing application.

As illustrated in FIG. 1, the smartphone 10 first executes a recording/editing application (Step S1). Subsequently, in a case where the user uses the audio quality enhancement function in the recording/editing application, the smartphone 10 transmits the sound source data selected as the target of the audio quality enhancement processing to the server apparatus 100 (Step S2).

The server apparatus 100 is an apparatus provided to be able to communicate with the smartphone 10 via a network N such as a mobile network or the Internet. The server apparatus 100 is implemented as a cloud server, for example.

The server apparatus 100 includes an audio quality enhancement processing model 102a (refer to FIG. 6), so as to be able to execute audio quality enhancement processing using the audio quality enhancement processing model 102a. The audio quality enhancement processing model 102a is a Deep Neural Network (DNN) model trained using a deep learning algorithm, for example.

The server apparatus 100 uses artificial intelligence (AI) processing using the audio quality enhancement processing model 102a to execute audio quality enhancement processing on the sound source data acquired from the smartphone 10 (Step S3). Subsequently, the server apparatus 100 transmits the data subjected to the audio quality enhancement processing to the smartphone 10, and the smartphone 10 receives the data (Step S4).

By a configuration in which the server apparatus 100 uses a cloud server model to integrally execute audio quality enhancement processing with a high processing load, the smartphone 10 can perform, even during the audio quality enhancement processing, continuous use of the recording/editing application or execution of another application within a range not affecting the audio quality enhancement processing.

As an example of this, the smartphone 10 executes parameter adjustment processing in parallel with audio quality enhancement processing (Step S5).

FIG. 4 illustrates an example of a parameter adjustment screen in Step S5. When the user uses the parameter adjustment function in the recording/editing application, the smartphone 10 causes the display unit 15 to display a parameter adjustment screen as illustrated in FIG. 4.

As illustrated in FIG. 4, the parameter adjustment screen according to the present embodiment enables use of tabs to select a type of a parameter to be adjusted (point P1). In the information processing method according to the present embodiment, the types of adjustable parameter that can be designated include at least "volume" and "reverb". FIG. 4 illustrates an example in which a tab T2 of "reverb" is selected, and a reverb adjustment screen capable of adjusting the intensity of the reverb for each editable track is displayed as one of the parameter adjustment screens.

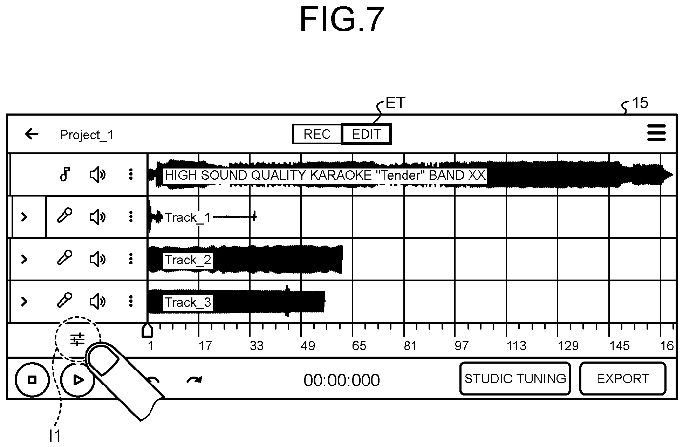

The smartphone 10 performs control to display the parameter adjustment screen in response to user's touch operation on an icon I1 (refer to FIG. 7), being an icon for parameter adjustment, on a track editing screen illustrated in drawings such as FIG. 7.

The track editing screen includes a waveform display area WA, being an area displaying a waveform of each track. As illustrated in FIG. 4, the smartphone 10 performs overlap display of a parameter adjustment component in the waveform display area WA (point P2) so as to display the parameter adjustment screen.

At this time, the smartphone 10 performs control to display the parameter adjustment screen in the form of a skeleton screen, that is, performs control to display the parameter adjustment screen so that the parameters can be adjusted while the waveform display area WA in the background is visible to the user. In addition, the smartphone 10 performs control to display the parameter adjustment screen so as to enable only an operable parameter adjustment component.

The parameter adjustment component includes a Graphical User Interface (GUI) such as a slider. This makes it possible for the user to easily adjust the parameter, for example, the intensity of the reverb of each track by intuitive operations.

This also makes it possible for the user to perform parameter adjustment while visually confirming the waveform display area WA, enabling the user to perform easy parameter adjustment according to the development, the intonation, or the like of the music estimated from the waveform of each track, for example.

In the case of a bar-shaped slider, the smartphone 10 performs control to display the slider using most of the lateral width of the waveform display area WA (for example, at least half or more of the lateral width). This layout can increase the length of the slider, enabling parameter adjustment with high resolution by the slider with the increased length. A specific UI example related to points P1 and P2 will be described below with reference to FIGS. 7 to 14.

In addition, the smartphone 10 performs control to display the parameter adjustment screen while enabling timing control with the audio quality enhancement processing (point P3). For example, when there is a track currently undergoing the audio quality enhancement processing performed by the server apparatus 100, the smartphone 10 performs control to display the parameter adjustment screen so that the parameter adjustment for this track can be performed only on the original track before undergoing the audio quality enhancement processing.

In addition, even at completion of the audio quality enhancement processing of the track that is being subjected to the audio quality enhancement processing, the smartphone 10 does not immediately perform, on the edit screen, additional display of the track that has undergone the audio quality enhancement processing during the display of the parameter adjustment screen, but performs additional display of the track at the timing when the parameter adjustment screen is finished. In addition, the smartphone 10 reflects a result of the adjustment performed on the original track before the audio quality enhancement processing, to the parameters of the track subjected to audio quality enhancement processing and then displayed as the additional display.

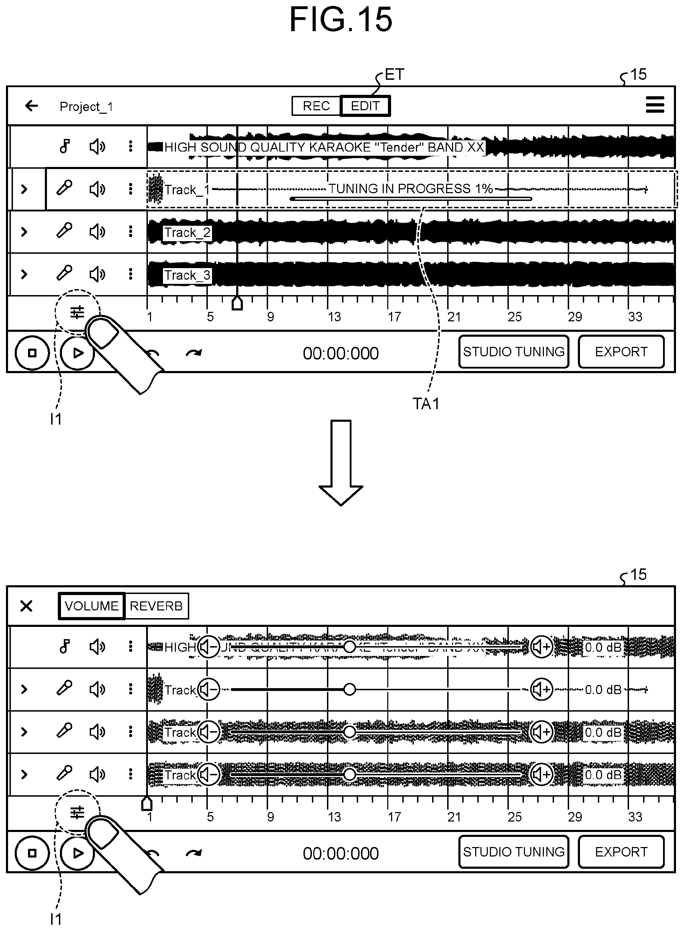

By performing such timing control with the audio quality enhancement processing, it is possible to ensure consistency between the original track before undergoing the audio quality enhancement processing and the track subjected to the audio quality enhancement processing while preventing user's confusion. A specific UI example related to point P3 will be described below with reference to FIGS. 15 to 18.

### <<2. Configuration example of smartphone>>

Next, a configuration example of the smartphone 10 will be described. FIG. 5 is a block diagram illustrating a configuration example of the smartphone 10 according to the embodiment of the present disclosure. Note that FIG. 5 and FIG. 6 (referred to later) illustrates only components necessary for describing features of the embodiment of the present disclosure, and omits description of ordinary components.

In other words, each of components illustrated in FIGS. 5 and 6 are provided as a functional and conceptional illustration and thus are not necessarily to be physically configured as illustrated. For example, the specific form of distribution/integration of each block is not limited to those depicted in the drawings, and all or a part thereof may be functionally or physically distributed or integrated into any units according to various loads and use conditions.

The description using FIGS. 5 and 6 will simplify or omit a description of already described components.

As illustrated in FIG. 5, the smartphone 10 includes a microphone 11, a speaker 12, a communication unit 13, an operation unit 14, a display unit 15, a storage unit 16, and a control unit 17.

Since the microphone 11 and the speaker 12 have been described above, the description thereof is omitted here. The communication unit 13 is implemented by a communication module or the like. The communication unit 13 is wirelessly connected to the above-described network N, and implements communication with the server apparatus 100 via the network N.

The operation unit 14 is an operation component mounted on the smartphone 10, and is implemented by a touch panel, for example. The display unit 15 is a display component mounted on the smartphone 10, and is implemented by a display, for example.

For example, the operation unit 14 and the display unit 15 are integrated to constitute the above-described touch screen. Therefore, the operation unit 14 may be a software component displayed on the display unit 15, and may be a GUI to be displayed as an operable part on the display unit 15 by the recording/editing application.

The storage unit 16 is implemented by semiconductor memory elements such as random access memory (RAM), read only memory (ROM), and flash memory. In the example illustrated in FIG. 5, the storage unit 16 stores application information 16a. The application information 16a is information including a recording/editing application program, and various parameters to be used during the operation of the recording/editing application.

The control unit 17 is a controller, and is implemented by execution of a program according to the embodiment of the present disclosure stored in the storage unit 16 by a central processing unit (CPU), a micro processing unit (MPU), or the like, using the RAM as a work area, for example. Furthermore, the control unit 17 can be implemented by, for example, an integrated circuit such as an Application Specific Integrated Circuit (ASIC) or a Field Programmable Gate Array (FPGA).

The control unit 17 includes an application execution unit 17a, a display control unit 17b, and a communication control unit 17c, and implements or executes functions and actions of information processing described below.

The application execution unit 17a loads the application information 16a stored in the storage unit 16 and executes the recording/editing application. For example, the application execution unit 17a executes the audio quality enhancement processing in accordance with the operation content at the time of executing the audio quality enhancement processing in the recording/editing application input from the operation unit 14. In addition, the application execution unit 17a executes parameter adjustment processing in accordance with the operation content at the time of executing the parameter adjustment processing in the recording/editing application input from the operation unit 14.

The application execution unit 17a causes the display control unit 17b to perform display control of visual information including various types of UI according to various operation contents at the time of execution of the recording/editing application including the audio quality enhancement processing and the parameter adjustment processing. Specific examples of various types of UI in the recording/editing application according to the present embodiment will be described below with reference to FIGS. 7 to 18.

The display control unit 17b performs display control of visual information on the display unit 15 when executing the recording/editing application on the basis of an instruction from the application execution unit 17a. The communication control unit 17c performs communication control on the server apparatus 100 at execution of the recording/editing application.

The communication control unit 17c uploads, for example, sound source data to be subjected to audio quality enhancement processing to the server apparatus 100 via the communication unit 13. The communication control unit 17c downloads, from the server apparatus 100 via the communication unit 13, data subjected to audio quality enhancement processing, that is, the data on which the audio quality enhancement processing has been performed in the server apparatus 100, for example.

### <<3. Configuration example of server apparatus>>

Next, the configuration example of the server apparatus 100 will be described. FIG. 6 is a block diagram illustrating a configuration example of the server apparatus 100 according to the embodiment of the present disclosure.

As illustrated in FIG. 6, the server apparatus 100 includes a communication unit 101, a storage unit 102, and a control unit 103.

Similarly to the communication unit 13 described above, the communication unit 101 is implemented by a communication module or the like. The communication unit 101 is connected to the network N in a wired or wireless channel to implement communication with the smartphone 10 via the network N.

Similarly to the storage unit 16 described above, the storage unit 102 is implemented by a semiconductor memory element such as RAM, ROM, or flash memory, for example. The storage unit 102 is also implemented by a disk device such as a hard disk device or an optical disk device. In the example illustrated in FIG. 6, the storage unit 102 stores the audio quality enhancement processing model 102a.

As described above, the audio quality enhancement processing model 102a is a DNN model trained using a deep learning algorithm, for example. The learning algorithm of the audio quality enhancement processing model 102a is not limited to deep learning. The audio quality enhancement processing model 102a is loaded by an audio quality enhancement processing unit 103b to be described below. When sound source data to be processed is input, the audio quality enhancement processing model 102a performs audio quality enhancement processing on the sound source data based on specified settings (options), and outputs data subjected to the audio quality enhancement processing.

The control unit 103 is a controller similarly to the above control unit 17, and is implemented by execution of various programs stored in a storage unit 102 by a CPU, an MPU, or the like, using the RAM as a work area. Furthermore, the control unit 103 can be implemented by an integrated circuit such as ASIC or FPGA.

The control unit 103 includes an acquisition unit 103a, an audio quality enhancement processing unit 103b, and a transmission unit 103c, and implements or executes functions and actions of information processing described below.

The acquisition unit 103a acquires, via the communication unit 101, options of the audio quality enhancement processing designated in the smartphone 10 and the sound source data to be processed. In addition, the acquisition unit 103a outputs the acquired individual data to the audio quality enhancement processing unit 103b.

The audio quality enhancement processing unit 103b loads the audio quality enhancement processing model 102a from the storage unit 102, and inputs each data received from the acquisition unit 103a to the audio quality enhancement processing model 102a. Furthermore, the audio quality enhancement processing unit 103b acquires the data subjected to the audio quality enhancement processing output from the audio quality enhancement processing model 102a, and outputs the acquired data to the transmission unit 103c.

The transmission unit 103c transmits, via the communication unit 101, the data subjected to the audio quality enhancement processing received from the audio quality enhancement processing unit 103b, to the smartphone 10.

### <<4. Various UI examples at execution of parameter adjustment processing>>

Next, various UI examples at the time of executing the parameter adjustment processing in the recording/editing application according to the present embodiment will be sequentially described with reference to FIGS. 7 to 18.

### <4-1. Basic example>

First, a basic UI example at execution of the parameter adjustment processing will be described. FIGS. 7 to 9 are (Part 1 to 3) diagrams illustrating basic UI examples.

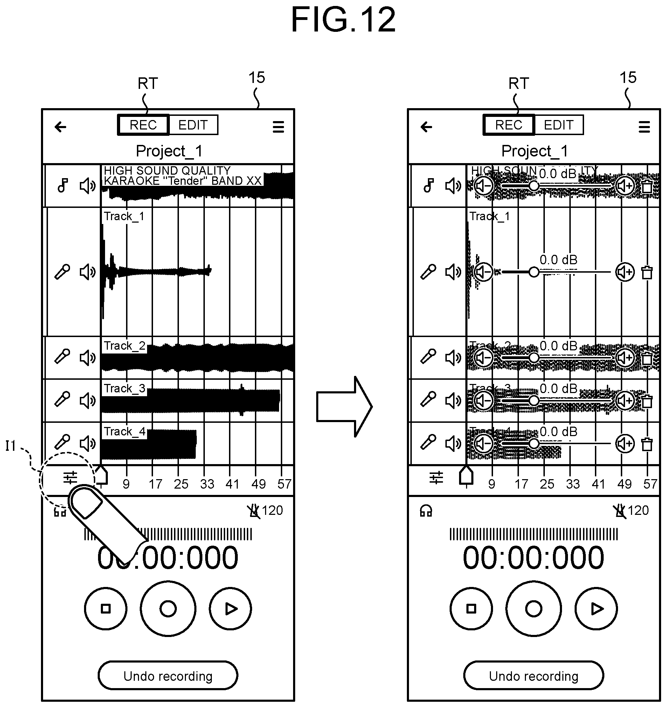

In a state where an EDIT tab ET is selected as illustrated in FIG. 7 during execution of the recording/editing application, the display control unit 17b performs control to display a track editing screen. As illustrated in FIG. 7, the edit screen displays items such as types of each editable track, icons for switching between the unmuted state/muted state, and waveforms. In a state where the REC tab adjacent to the EDIT tab ET is selected, the display control unit 17b performs control to display a track recording screen illustrated in subsequent drawings such as FIG. 12.

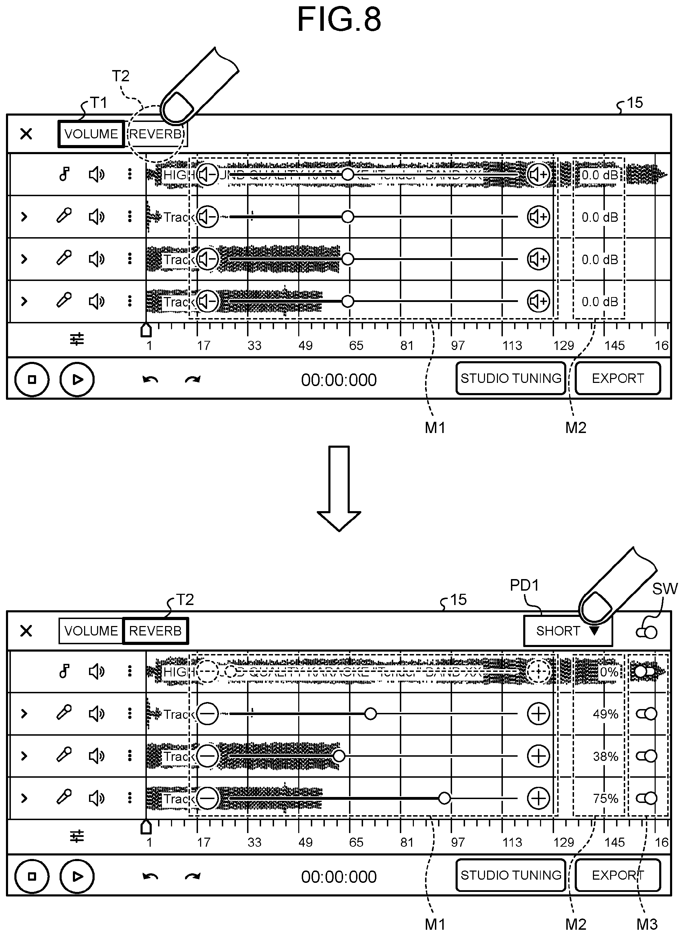

In addition, as illustrated in FIG. 7, the display control unit 17b performs control to display an icon I1 for parameter adjustment of each track on the edit screen and the recording screen. Subsequently, when the user performs a touch operation on the icon I1 on the edit screen, the display control unit 17b performs control to display a volume adjustment screen, which is one of the parameter adjustment screens, in a state where a tab T1 indicating "volume" is selected by default as illustrated in the upper drawing of FIG. 8.

Furthermore, when the user selects the tab T2 indicating "reverb" in a state where the volume adjustment screen is displayed, the display control unit 17b performs control to display a reverb adjustment screen, which is one of the parameter adjustment screens, as illustrated in the lower drawing of FIG. 8.

The volume adjustment screen and the reverb adjustment screen each include an operation component area M1 and a set value area M2. The reverb adjustment screen further includes a pull-down PD1, an overall switch SW, and an operation component area M3.

On the volume adjustment screen, the operation component area M1 includes a display of a slider enabling volume adjustment for each track. On the other hand, on the reverb adjustment screen, the area includes a display of a slider enabling reverb adjustment for each track. Icons indicating -/+ of the slider are designed differently, for example, so as to be easily distinguished between the volume adjustment screen and the reverb adjustment screen. In the example illustrated in FIG. 8, the icon simply indicates -/+ on the reverb adjustment screen, whereas the sound volume adjustment screen includes a design representing a speaker.

The set value area M2 displays a set value, a value indicating the sound volume or the intensity of the reverb, set by the slider. The setting value in the set value area M2 is variably displayed in conjunction with the movement of the slider. Incidentally, as illustrated in FIG. 8, regarding the set value in the set value area M2, the sound volume is displayed in units of decibels, for example, on the sound volume adjustment screen while the intensity of the reverb is displayed, for example, in units of% on the reverb adjustment screen.

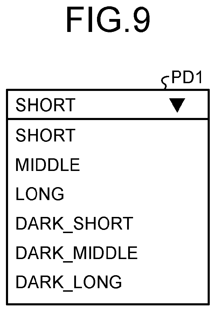

The pull-down PD1 is displayed on the reverb adjustment screen so as to be able to change the type of reverb. As illustrated in the lower drawing of FIG. 8, in response to the user's touch operation on the pull-down PD1, various presets of the reverb prepared in advance are displayed as illustrated in FIG. 9. By selecting any one of the presets, the user can set the reverb using the selected preset.

Returning to the description of FIG. 8. The overall switch SW is displayed as a switch that enables overall off/on settings of the reverb adjustment function. The operation component area M3 includes displays of individual switches enabling off/on settings of individual reverb adjustment functions for each track.

### <4-2. Muting>

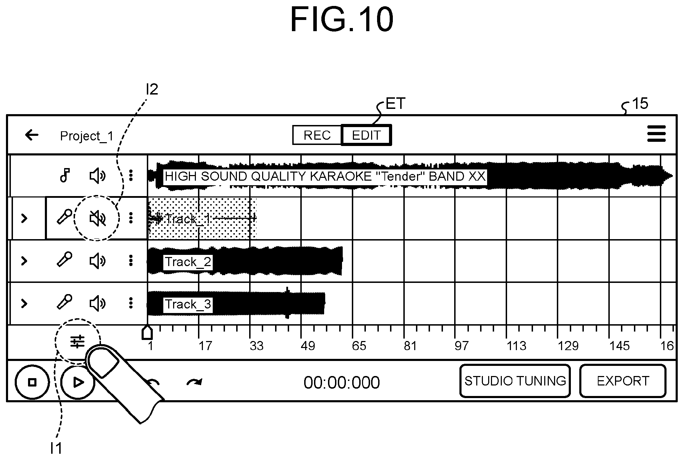

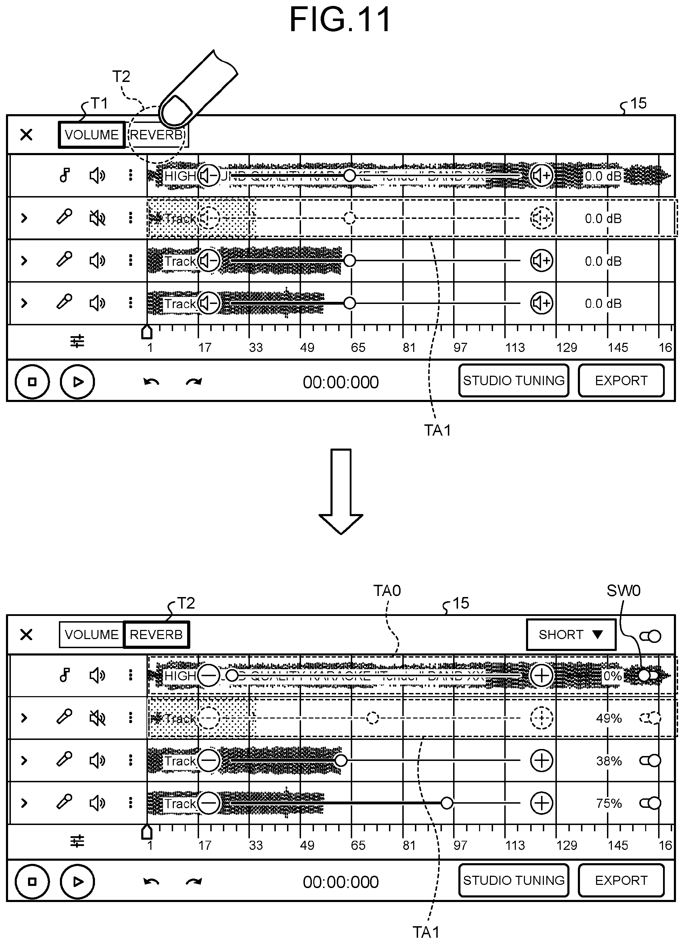

Next, a UI example including a track in a muted state will be described. FIGS. 10 and 11 are diagrams (part 1) and (part 2) illustrating a UI example at the time of muting.

As illustrated in FIG. 10, the unmuted state/muted state of each track can be switched by an icon I2 displayed by the display control unit 17b.

Here is an assumable case where the icon I2 is operated on the edit screen of the recording/editing application and a track (Track_1) on the second row of the track list is in a muted state as illustrated in FIG. 10. Incidentally, the track on the first row is supposed to be sound source data captured from the outside by purchasing, etc.

Subsequently, in this state, when the user performs a touch operation on the icon I1, the display control unit 17b performs control to display the volume adjustment screen in a state where the tab T1 indicating "volume" is selected by default as illustrated in the upper drawing of FIG. 11.

Furthermore, when the user selects the tab T2 indicating "reverb" in a state where the volume adjustment screen is displayed, the display control unit 17b performs control to display a reverb adjustment screen, as illustrated in the lower drawing of FIG. 11.

In the sound volume adjustment screen and the reverb adjustment screen in this case, note that the display control unit 17b invalidates the track of the second row, which is in the muted state, by graying out operation components such as the slider to be displayed in an overlap display in a waveform display area TA1, for example, to set the track inoperable.

In addition, the display control unit 17b invalidates the track of the first row including data captured from the outside, by graying out the slider to be displayed in an overlap display in the waveform display area TA0 on the reverb adjustment screen, for example, to set the track inoperable.

This is to turn off the reverb adjustment function as a default setting since the sound source data acquired from the outside needs no reverb adjustment in typical cases. Note that, as illustrated in the lower drawing of FIG. 11, even in this case, switch SW0 for individually turning off/on the reverb adjustment function for the track of the first row is valid. The user can enable reverb adjustment on the captured sound source data by turning on switch SW0.

### <4-3. Recording screen>

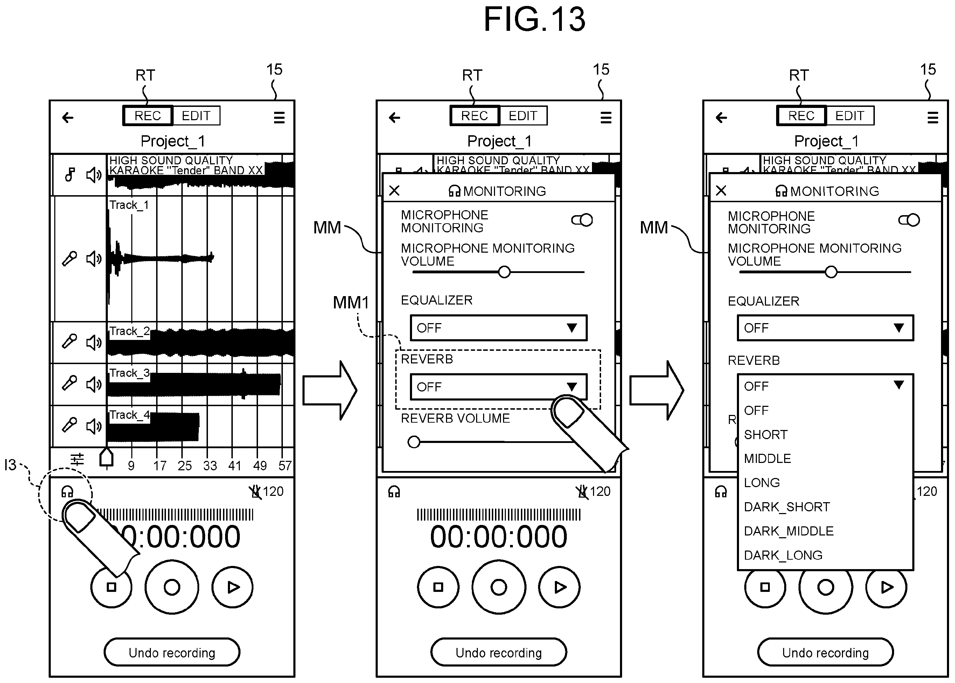

Next, UI examples on the recording screen will be described. FIGS. 12 and 13 are diagrams (part 1) and (part 2) illustrating UI examples on the recording screen.

As described above, the display control unit 17b performs control to display the icon I1 for parameter adjustment not only on the edit screen but also on the recording screen. Here, an operation in a case where a touch operation is performed on the icon I1 on the recording screen will be described.

In a state where an REC tab RT is selected as illustrated in a left drawing of FIG. 12 during execution of the recording/editing application, the display control unit 17b performs control to display a track recording screen. Subsequently, when the user performs a touch operation on the icon I1 on the recording screen, as illustrated in the right drawing of FIG. 12, the display control unit 17b displays only the volume adjustment screen as the parameter adjustment screen so as to enable only the volume adjustment, without enabling selection of the reverb adjustment screen. That is, the display control unit 17b does not prepare the above-described tab T2.

In this manner, the recording/editing application according to the present embodiment disables reverb adjustment even with a touch operation on the icon I1 on the recording screen. This is for eliminating complexity in the parameter adjustment processing and enhancing operability by omitting functions other than the functions necessary for recording, on the recording screen.

In addition, the recording/editing application has a monitoring function of outputting the user's own voice from the headphones at the time of recording. As illustrated in the left drawing of FIG. 13, the recording screen includes a display of an icon I3 related to the monitoring function. When the user performs a touch operation on the icon I3, the display control unit 17b performs control to display a menu MM of the monitoring function as illustrated in the center drawing of FIG. 13.

As illustrated in the central diagram and the right diagram of FIG. 13, when the user selects the menu MM1 related to reverb from the menu MM and selects an optional reverb setting, the user can apply reverb to their own voice and listen to the result. The content of the menu MM1 is similar to the preset illustrated in FIG. 9, for example. However, there is no need to link the menu with the preset, and separate settings are possible.

Note that the reverb applied by the method illustrated in FIG. 13 is applied only to monitoring data audible for the user at the time of monitoring, and is not reflected to recorded data, being data obtained by recording. Regarding the recorded data, reverb can be individually applied to each piece of recorded data on the reverb adjustment screen of the edit screen illustrated in FIGS. 8 and 11.

### <4-4. Comping editing>

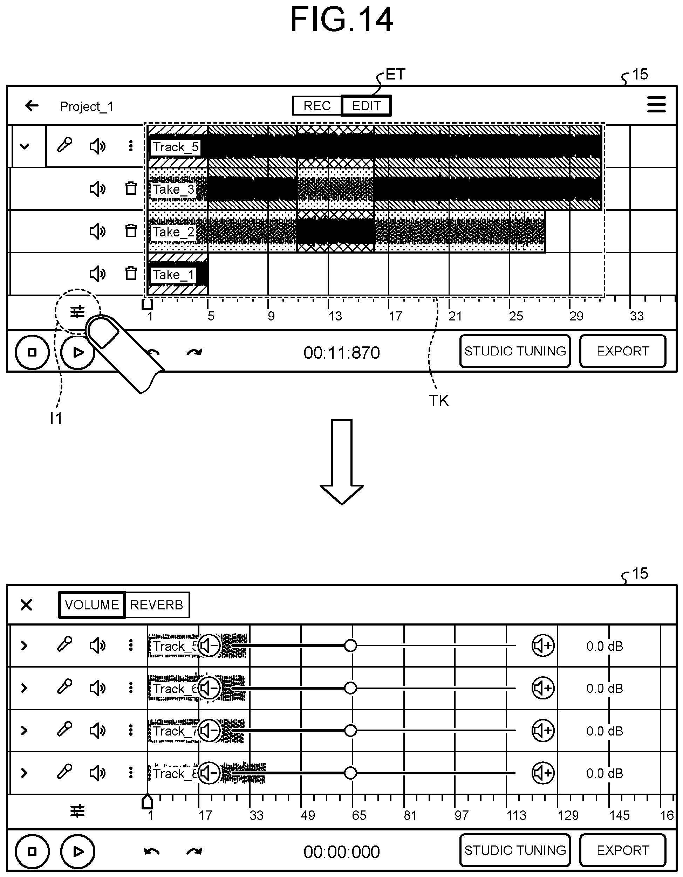

Next, UI examples at comping editing will be described. FIG. 14 is a diagram illustrating a UI example at comping editing.

The recording/editing application according to the present embodiment has a comping editing function. The comping editing is an editing work of connecting good parts from a plurality of takes, which are a plurality of pieces of recorded data for one track, to one track.

When the user uses this comping editing function, the display control unit 17b performs control to display an edit screen TK on the edit screen of the recording/editing application as illustrated in the upper drawing of FIG. 14. The upper drawing in FIG. 14 illustrates an example of connecting partial ranges of three takes (Take_1 to Take_3) and combining them into one track (Track_5).

When a touch operation is performed on the icon I1 for parameter adjustment on the currently displayed comping editing screen TK, the display control unit 17b performs control to close the comping editing screen TK and display the parameter adjustment screen including only the track list as illustrated in the lower drawing of FIG. 14.

For example, this is because the reverb is not applied to each take used at the time of the comping editing, but applied to a track obtained by connecting individual takes. The similar applies to the volume. This makes it possible to allow the user to reliably perform parameter adjustment for the track without causing the user to confuse data to be subjected to parameter adjustment.

### <4-5. Timing control with audio quality enhancement processing>

Next, UI examples at the time of timing control with audio quality enhancement processing will be described. This section corresponds to point P3 illustrated in FIG. 4. FIGS. 15 to 18 are diagrams (part 1) to (part 4) illustrating UI examples at the time of timing control with audio quality enhancement processing.

When the user selects a track to be subjected to audio quality enhancement processing, specifies necessary settings on an audio quality enhancement processing execution screen (not illustrated), and performs touch operation on the execution button, the audio quality enhancement processing is executed. The display control unit 17b notifies a progress status of the audio quality enhancement processing on the edit screen during execution of the audio quality enhancement processing.

As specific items notified by the display control unit 17b includes display of "uploading", "tuning", "downloading", together with indicators representing each progress status. The upper drawing in FIG. 15 illustrates an example in which the track (Track_1) on the second row of the track list is a target of the audio quality enhancement processing, and an indicator indicating that the track is "tuning" (being processed in the server apparatus 100) is displayed in the waveform display area TA1 of this track.

In this state, when the user performs a touch operation on the icon I1 for parameter adjustment, as illustrated in the lower drawing of FIG. 15, the display control unit 17b performs control to temporarily close the indicator and display the parameter adjustment screen to enable parameter adjustment only on the original track before undergoing audio quality enhancement processing. That is, the track currently under the audio quality enhancement processing is subjected to volume adjustment and reverb adjustment on the original sound source data, and then is reproduced.

When a touch operation is performed on the icon I1 from the state of the lower drawing of FIG. 15, the parameter adjustment screen is closed, and the state returns to the state of the upper drawing of FIG. 15 to redisplay the indicator.

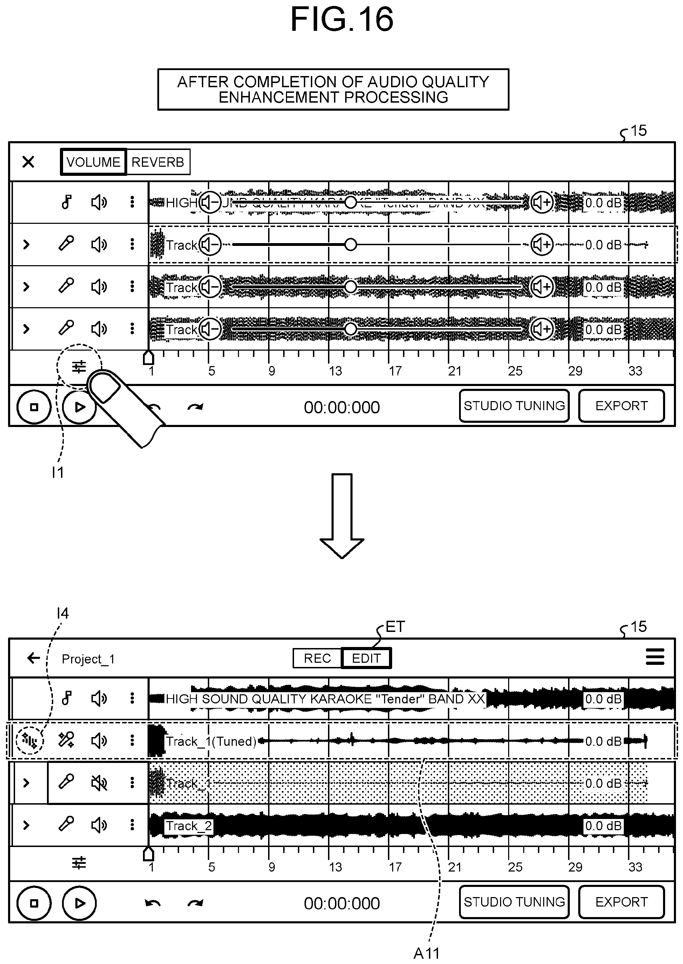

On the other hand, when the parameter adjustment screen is being displayed even after completion of the audio quality enhancement processing as illustrated in the upper drawing of FIG. 16, the display control unit 17b suspends the display control of indicating completion of audio quality enhancement processing.

Only after the user performs the touch operation on the icon I1 after completion of audio quality enhancement processing, the display control unit 17b performs display control of indicating completion of audio quality enhancement processing as illustrated in the lower drawing of FIG. 16.

Specifically, as illustrated in the lower drawing of FIG. 16, the display control unit 17b additionally performs control to display the track subjected to audio quality enhancement processing at position A11 above the track before undergoing audio quality enhancement processing. The display control unit 17b also performs control to display an icon I4 indicating that the audio quality enhancement processing has been performed.

For example, the display control unit 17b grays out the display of the track before undergoing audio quality enhancement processing. In addition, since the track before undergoing audio quality enhancement processing is basically unnecessary, the track is automatically muted after the audio quality enhancement processing.

In addition, the application execution unit 17a attaches a track name different from a track name before undergoing audio quality enhancement processing, to the track subjected to the audio quality enhancement processing, and the display control unit 17b performs control to display the track name accordingly. The basic naming rule is, for example, adding "(Tuned)" to the original track name before undergoing audio quality enhancement processing.

The application execution unit 17a reflects a result of the adjustment performed on the original track before undergoing audio quality enhancement processing, to the individual parameters of the track subjected to the audio quality enhancement processing and then displayed as the additional display.

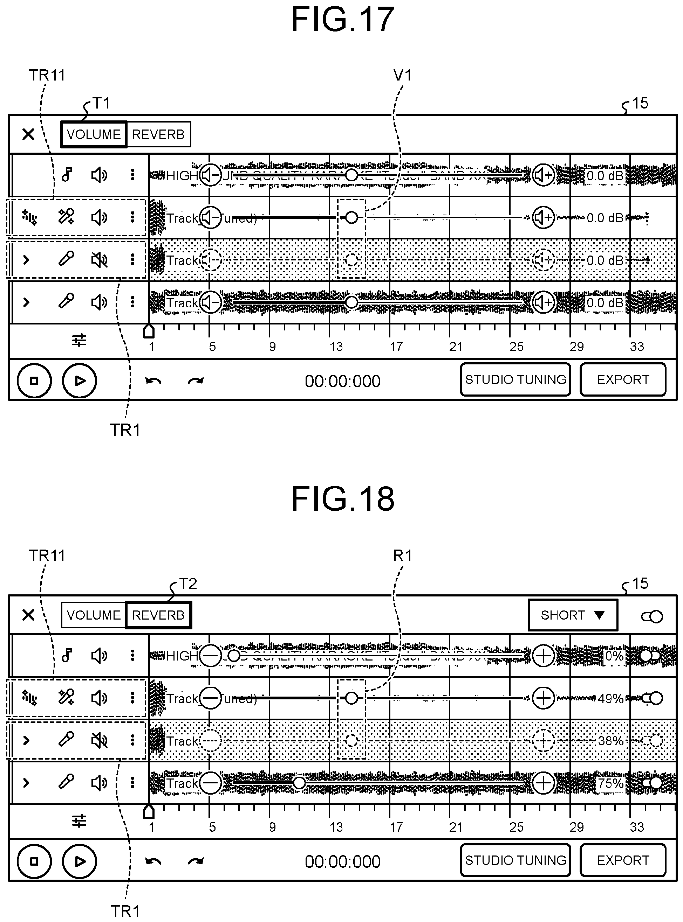

Specifically, as illustrated in FIG. 17, the application execution unit 17a automatically sets the set value set for the original track TR1 before undergoing the audio quality enhancement processing to track TR11 on which the audio quality enhancement processing has been performed, for example, for the sound volume (refer to a portion V1 in the drawing). Subsequently, the display control unit 17b performs display control corresponding to this setting.

Furthermore, as illustrated in FIG. 18, also regarding the intensity of the reverb, the application execution unit 17a automatically sets the setting value set for the original track TR1 before the audio quality enhancement processing for track TR11 that has undergone the audio quality enhancement processing (refer to a part with symbol R1 in the drawing). Subsequently, the display control unit 17b performs display control corresponding to this setting.

By performing such timing control with the audio quality enhancement processing, it is possible to ensure consistency between the original track TR1 before the audio quality enhancement processing and track TR11 subjected to the audio quality enhancement processing while preventing user's confusion.

### <<5. Modification>>

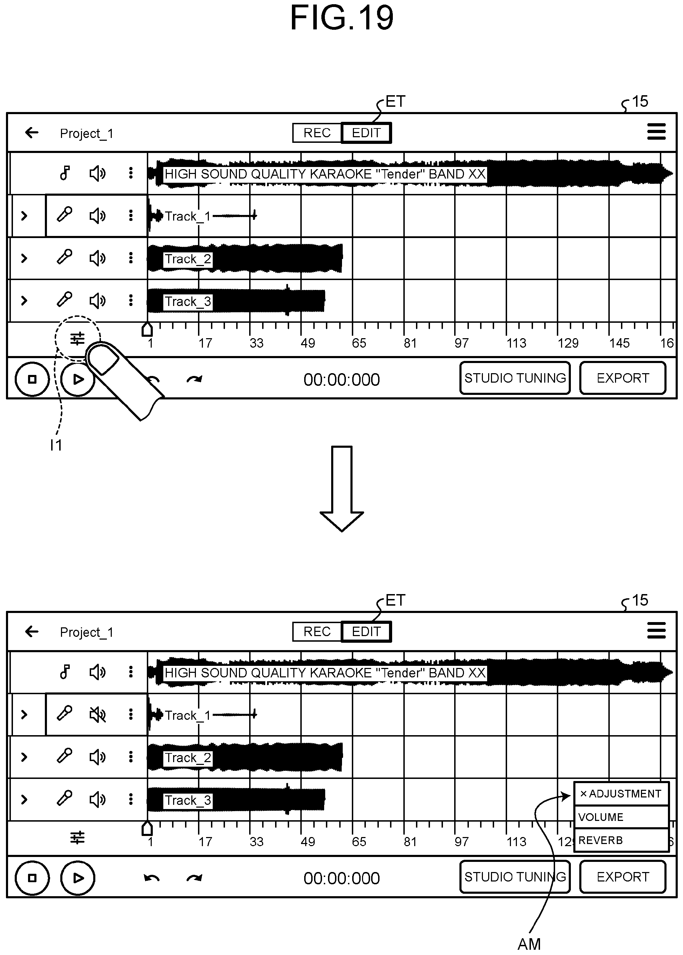

The present embodiment described above can be provided with several modifications. FIGS. 19 to 27 are diagrams (part 1) to (part 9) illustrating UI examples according to modifications.

### <5-1. First modification>

In the present embodiment described above, when a touch operation is performed on the icon I1 for parameter adjustment, the display control unit 17b performs display control in which the type of parameter adjustment can be selected by the tabs T1 and T2.

However, the type of parameter adjustment is not limited to this. For example, when touch operation is performed on the icon I1 as illustrated in FIG. 19, the display control unit 17b may display a menu AM and allow the user to select the type of parameter adjustment from the menu AM.

### <5-2. Second modification>

In the present embodiment described above, the display control unit 17b performs control to perform overlap display of the parameter adjustment components in the waveform display area of the track. However, there is no need to perform overlap display of the components.

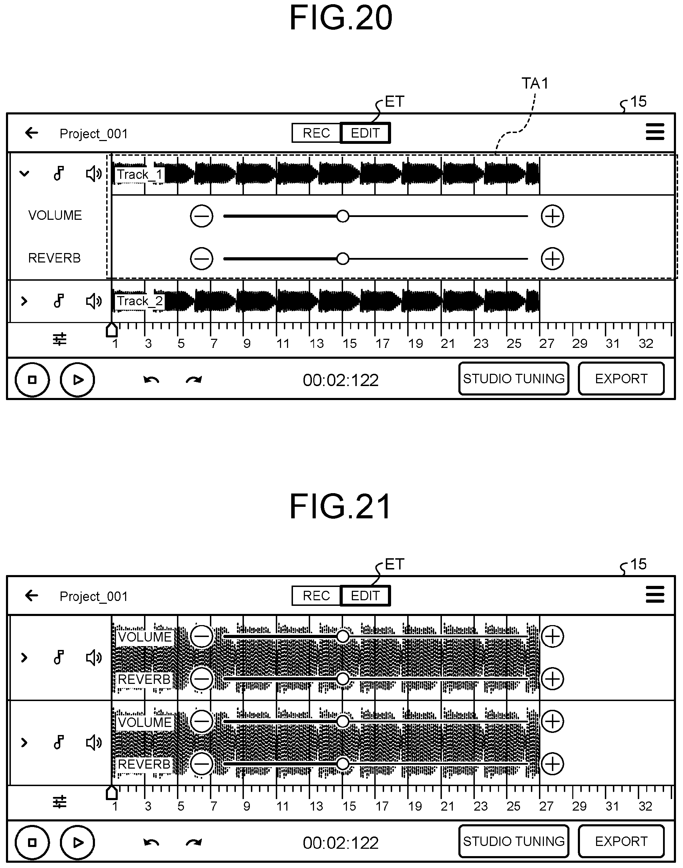

For example, as illustrated in FIG. 20, in a case where the user selects one of the tracks from the track list on the edit screen, the display control unit 17b may perform display control of developing the parameter adjustment components such as the volume and the reverb in parallel with the waveform display area in the column direction of the track list.

This case also makes it possible to increase the length of the slider, for example, enabling high-resolution parameter adjustment with the slider.

### <5-3. Third modification>

In addition, in the present embodiment described above, the display control unit 17b performs control to perform the overlap display of one type of parameter adjustment component onto the waveform display area, but the parameter adjustment component is not necessarily limited to one type.

For example, as illustrated in FIG. 21, the display control unit 17b may simultaneously display a plurality of types of parameter adjustment components such as volume and reverb in the waveform display area of each track of the track list.

In this case, the user can grasp the type of the adjustable parameter at a glance without selecting the type of parameter adjustment, making it possible to enhance the operability related to the parameter adjustment.

### <5-4. Fourth modification>

In addition, in the present embodiment described above, an example has been described in which the type of parameter adjustment is selected by the tabs T1 and T2 and the type is selected by the menu AM in the description using FIG. 19. However, the method of selecting the type of parameter adjustment is not limited to these examples.

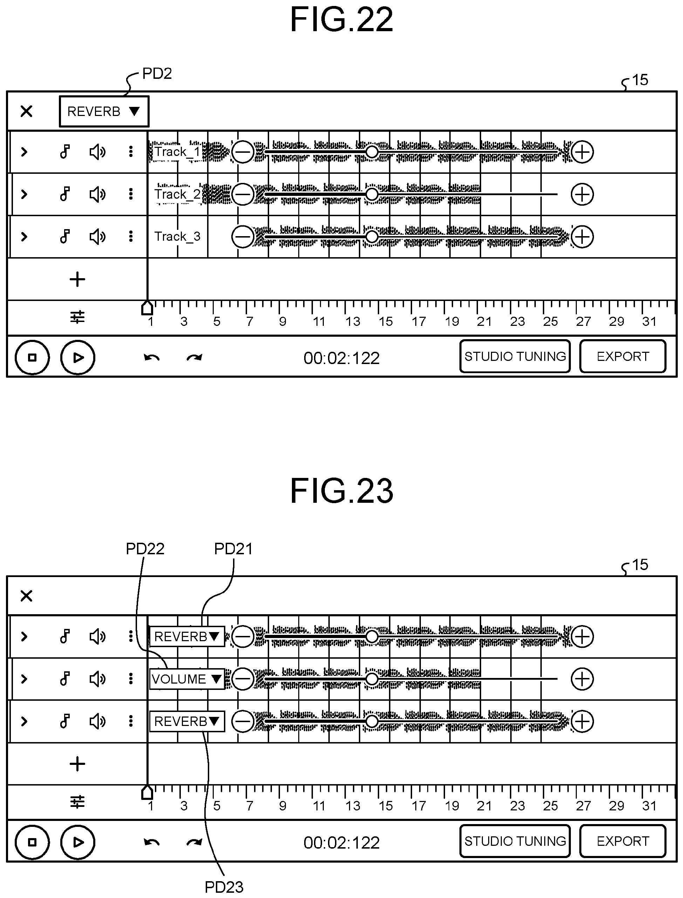

For example, as illustrated in FIG. 22, the display control unit 17b may display a pull-down PD2 instead of the tabs T1 and T2, and may allow the user to select the type of parameter adjustment from the pull-down PD2.

Furthermore, for example, as illustrated in FIG. 23, the display control unit 17b may display similar pull-down PD21, PD22, PD23,... for each track of the track list, and may allow the user to select the type of parameter adjustment from the pull-down PD21, PD22, PD23,....

### <5-5. Fifth modification>

Furthermore, although the present embodiment described above uses two types of "volume" and "reverb" as the types of adjustable parameters, it is also allowable to use three or more types of parameters.

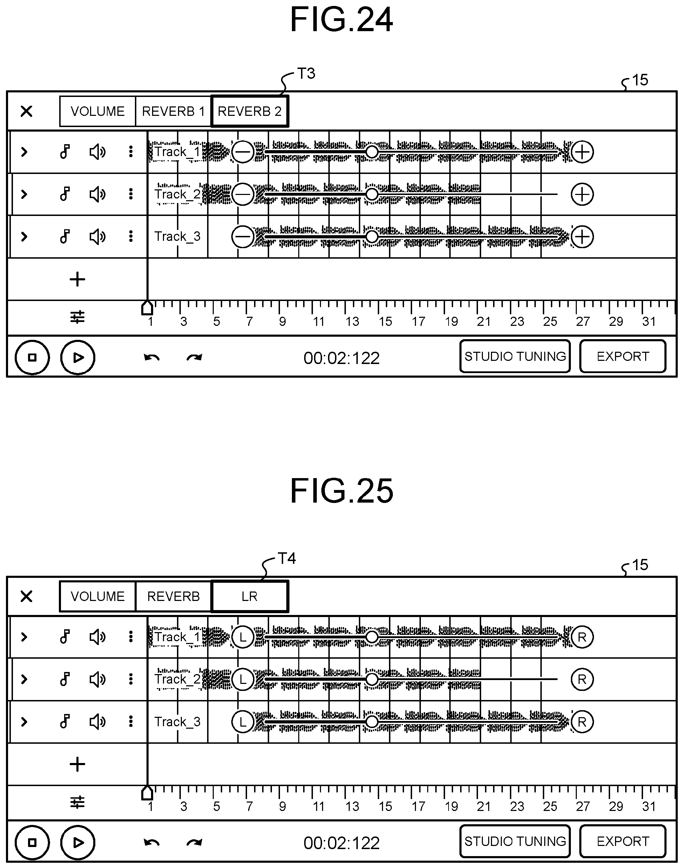

For example, as illustrated in FIG. 24, the reverb may include two systems of "reverb 1" and "reverb 2", and the display control unit 17b may display the parameter adjustment component corresponding to "reverb 2" in a case where a touch operation is performed on tab T3 for "reverb 2".

Furthermore, for example, as illustrated in FIG. 25, it is also allowable to provide "LR" for balance adjustment in addition to "volume" and "reverb". In this case, the display control unit 17b may control to display a parameter adjustment component corresponding to this "LR" in a case where a touch operation is performed on tab T4 for this "LR".

Incidentally, there are many types of parameters that can be adjusted at the time of reproduction or mixing other than those illustrated in the present embodiment or illustrated in FIGS. 24 and 25. Example of these adjustable parameters can include "tone", "dynamics", and "effects". With the "tone", the frequency characteristic of the sound is adjusted by an equalizer, a filter, or the like. With "dynamics", a limiter, a compressor, or the like is used to adjust a peak operation, an average level, or the like of a sound source. The "effect " includes "reverb" described above, but for example, the sound image and space are adjusted by spatial effect processing using techniques such as such as a reverberator, a chorus, a delay, and a flanger.

### <5-6. Sixth modification>

While the above present embodiment and FIGS. 19 to 25 have described examples of using a bar-shaped slider for parameter adjustment, the shape of the parameter adjustment component is not limited to this example.

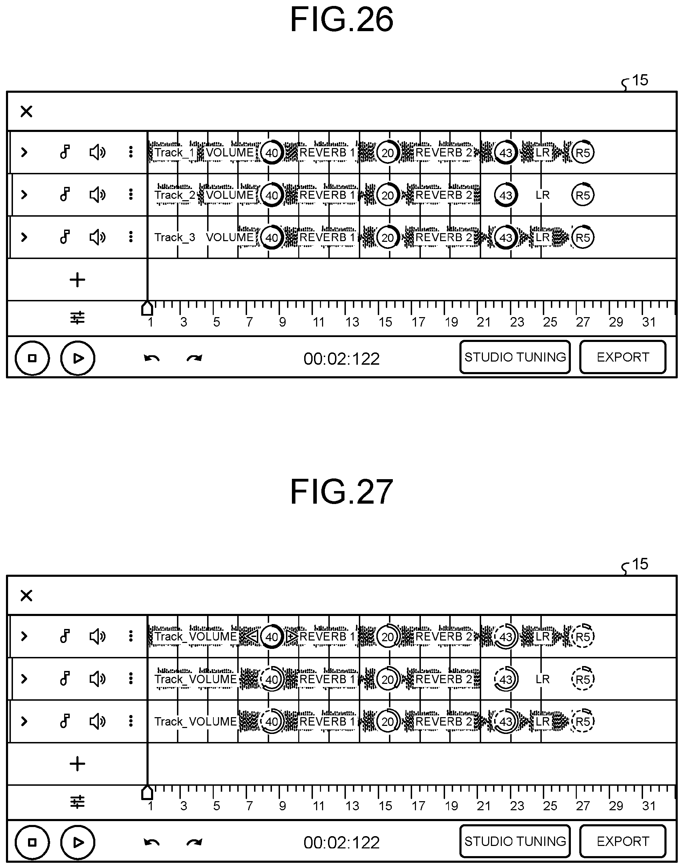

For example, as illustrated in FIG. 26, the display control unit 17b may control to display a circular slider as a parameter adjustment component. The circular slider, when dragged by the user to right and left while being touched, makes it possible for the user to perform parameter adjustment.

Furthermore, for example, as illustrated in FIG. 27, the display control unit 17b may control to display a parameter adjustment component having a circular shape combined with a -/+ button. The circular adjustment component is selected by a user's touch operation, and at the same time of selection, the -/+ button is displayed as an extension. The user performs a touch operation on the - /+ button to adjust the selected parameter by one step at a time.

The examples illustrated in FIGS. 26 and 27 also make is possible for the user to easily adjust the parameter by an intuitive operation.

Among the processing described in the embodiments of the present disclosure described above, all or a part of the processing described as being performed automatically can be performed manually, or all or a part of the processing described as being performed manually can be performed automatically by a known method. In addition, the processing procedure, specific name, and information including various types of data and parameters illustrated in the document and the drawings can be arbitrarily changed unless otherwise specified. For example, the various types of information illustrated in each figure are not limited to the illustrated information.

In addition, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like.

In addition, the above-described embodiments can be appropriately combined in a region in which the processing contents do not contradict each other. In addition, the order of the steps illustrated in the sequence diagram or the flowchart of the present embodiment can be changed as appropriate.

### <<6. Hardware Configuration>>

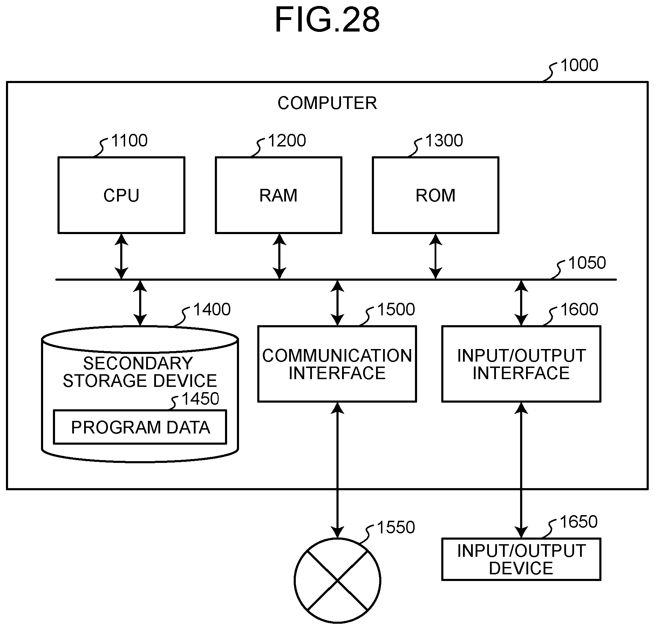

Furthermore, the smartphone 10 and the server device 100 according to the embodiment of the present disclosure described above are realized by a computer 1000 having a configuration as illustrated in FIG. 28, for example. The smartphone 10 will be described as an example. FIG. 28 is a hardware configuration diagram illustrating an example of the computer 1000 that implements the functions of the smartphone 10. The computer 1000 includes a CPU 1100, a RAM 1200, a ROM 1300, a secondary storage device 1400, a communication interface 1500, and an input/output interface 1600. Each unit of the computer 1000 is connected by a bus 1050.

The CPU 1100 operates based on a program stored in the ROM 1300 or the secondary storage device 1400, and controls each unit. For example, the CPU 1100 develops the program stored in the ROM 1300 or the secondary storage device 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The secondary storage device 1400 is a computer-readable recording medium that non-transiently records a program executed by the CPU 1100, data used by the program, and the like. Specifically, the secondary storage device 1400 is a recording medium that records a program according to the embodiment of the present disclosure corresponding to the application information 16a that is an example of the program data 1450.

The communication interface 1500 is an interface for the computer 1000 to connect to an external network 1550. For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a microphone or a touch panel via the input/output interface 1600. In addition, the CPU 1100 transmits data to an output device such as a display or a speaker via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the smartphone 10 according to the embodiment of the present disclosure, the CPU 1100 of the computer 1000 implements the function of the control unit 17 by executing a program loaded on the RAM 1200. In addition, the secondary storage device 1400 stores a program according to the present disclosure and data in the storage unit 16. Note that the CPU 1100 reads the program data 1450 from the secondary storage device 1400 and executes the program data, but as another example, these programs may be acquired from another device via the external network 1550.

### <<7. Conclusion>>

As described above, according to an embodiment of the present disclosure, the smartphone 10 (corresponding to an example of an "information processing apparatus") includes: the control unit 17 provided to be able to execute a recording/editing application (corresponding to an example of an "application having recording function and an editing function of a sound source data"); and the display unit 15 that displays visual information related to the recording/editing application. Furthermore, in a case where the sound source data to be subjected to audio quality enhancement is selected by the user via the recording/editing application, the control unit 17 executes audio quality enhancement processing of the sound source data. The control unit 17 executes parameter adjustment processing of the sound source data in parallel with the audio quality enhancement processing, and performs control to perform overlap display of a parameter adjustment component of the parameter adjustment processing in the waveform display area WA of the sound source data, which is displayed on the display unit 15 during execution of the recording/editing application. This makes it possible to improve convenience when the user creates a certain music content.

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

The effects described in individual embodiments of the present specification are merely examples, and thus, there may be other effects, not limited to the exemplified effects.

Note that the present technology can also have the following configurations.
(1) An information processing apparatus comprising:
   a control unit configured to be able to execute an application having a recording function and an editing function of sound source data; and a display unit configured to display visual information related to the application,
   wherein the control unit executes
   audio quality enhancement processing of the sound source data to be subjected to audio quality enhancement when the sound source data to be subjected to audio quality enhancement has been selected by the user via the application,
   executes parameter adjustment processing of the sound source data in parallel with the audio quality enhancement processing, and
   causes a parameter adjustment component in the parameter adjustment processing to be displayed in a form of an overlap display onto a waveform display area of the sound source data, the area being displayed on the display unit during the execution of the application.
(2) The information processing apparatus according to (1),
   wherein the control unit performs control to perform overlap display of the adjustment component to allow the waveform display area to be visible to the user.
(3) The information processing apparatus according to (1) or (2),
   wherein the adjustment component is a slider.
(4) The information processing apparatus according to (3),
   wherein the slider has a bar shape.
(5) The information processing apparatus according to (4),
   wherein the control unit performs control to perform overlap display of the slider over at least half or more of a width of the waveform display area.
(6) The information processing apparatus according to (3),
   wherein the slider has a circular shape.
(7) The information processing apparatus according to any one of (1) to (6),
   wherein the parameter adjustment processing includes adjustment of the parameter, including at least volume of the sound source data and intensity of reverb of the sound source data.
(8) The information processing apparatus according to (7),
   wherein the control unit performs control to selectively display, on the display unit, a type of a parameter, including the sound volume and the intensity of the reverb, by using at least one of a tab, a menu, or a pull-down.
(9) The information processing apparatus according to any one of (1) to (8),
   wherein the control unit performs display control related to the audio quality enhancement processing and the parameter adjustment processing while performing timing control with the audio quality enhancement processing.
(10) The information processing apparatus according to (9),
   wherein the control unit
   notifies the display unit of a progress status of the audio quality enhancement processing during execution of the audio quality enhancement processing, and
   when having received a selection operation of the parameter adjustment processing from a user during the notification of the progress status,
   the control unit performs control to close the notification of the progress status and display the adjustment component so as to enable adjustment of the parameter only for the sound source data being original sound source data before undergoing the audio quality enhancement processing.
(11) The information processing apparatus according to (10),
   wherein, when having received an operation of canceling the selection of the parameter adjustment processing from the user, the control unit redisplays the notification of the progress status.
(12) The information processing apparatus according to (10) or (11),
   wherein, when the parameter adjustment processing is being selected at completion of the audio quality enhancement processing, the control unit suspends a display control of indicating completion of the audio quality enhancement processing, and when having received an operation of canceling the selection of the parameter adjustment processing from a user, the control unit performs display control of indicating completion of the audio quality enhancement processing.
(13) The information processing apparatus according to (12),
   wherein, when performing display control indicating completion of the audio quality enhancement processing, the control unit reflects a result of the adjustment of the parameter performed on the original sound source data, onto the parameter of the sound source data subjected to the audio quality enhancement processing.
(14) The information processing apparatus according to any one of (1) to (13), wherein the apparatus is provided as a mobile apparatus.
(15) An information processing method, being a method to be executed by an information processing apparatus, the method comprising:
   executing an application having a recording function and an editing function of sound source data;
   causing a display unit to display visual information related to the application;
   executing audio quality enhancement processing of the sound source data to be subjected to audio quality enhancement when the sound source data to be subjected to audio quality enhancement has been selected by the user via the application,
   executing parameter adjustment processing of the sound source data in parallel with the audio quality enhancement processing, and
   causing a parameter adjustment component in the parameter adjustment processing to be displayed in a form of an overlap display onto a waveform display area of the sound source data, the area being displayed on the display unit during the execution of the application.
(16) A program causing a computer to execute processing comprising:
   executing an application having a recording function and an editing function of sound source data;
   causing a display unit to display visual information related to the application;
   executing audio quality enhancement processing of the sound source data to be subjected to audio quality enhancement when the sound source data to be subjected to audio quality enhancement has been selected by the user via the application,
   executing parameter adjustment processing of the sound source data in parallel with the audio quality enhancement processing, and
   causing a parameter adjustment component in the parameter adjustment processing to be displayed in a form of an overlap display onto a waveform display area of the sound source data, the area being displayed on the display unit during the execution of the application.
(17) A computer-readable recording medium, being a medium recording a program for causing a computer to execute processing including:
   executing an application having a recording function and an editing function of sound source data;
   causing a display unit to display visual information related to the application;
   executing audio quality enhancement processing of the sound source data to be subjected to audio quality enhancement when the sound source data to be subjected to audio quality enhancement has been selected by the user via the application,
   executing parameter adjustment processing of the sound source data in parallel with the audio quality enhancement processing, and
   causing a parameter adjustment component in the parameter adjustment processing to be displayed in a form of an overlap display onto a waveform display area of the sound source data, the area being displayed on the display unit during the execution of the application.

### Reference Signs List

1 INFORMATION PROCESSING SYSTEM
10 SMARTPHONE
11 MICROPHONE
12 SPEAKER
13 COMMUNICATION UNIT
14 OPERATION UNIT
15 DISPLAY UNIT
16 STORAGE UNIT
16a APPLICATION INFORMATION
17 CONTROL UNIT
17a APPLICATION EXECUTION UNIT
17b DISPLAY CONTROL UNIT
17c COMMUNICATION CONTROL UNIT
100 SERVER APPARATUS
101 COMMUNICATION UNIT
102 STORAGE UNIT
102a AUDIO QUALITY ENHANCEMENT PROCESSING MODEL
103 CONTROL UNIT
103a ACQUISITION UNIT
103b AUDIO QUALITY ENHANCEMENT PROCESSING UNIT
103c TRANSMISSION UNIT

## Claims

1. An information processing apparatus comprising:
a control unit configured to be able to execute an application having a recording function and an editing function of sound source data; and a display unit configured to display visual information related to the application,
wherein the control unit executes
audio quality enhancement processing of the sound source data to be subjected to audio quality enhancement when the sound source data to be subjected to audio quality enhancement has been selected by the user via the application,
executes parameter adjustment processing of the sound source data in parallel with the audio quality enhancement processing, and
causes a parameter adjustment component in the parameter adjustment processing to be displayed in a form of an overlap display onto a waveform display area of the sound source data, the area being displayed on the display unit during the execution of the application.

2. The information processing apparatus according to claim 1,
wherein the control unit performs control to perform overlap display of the adjustment component to allow the waveform display area to be visible to the user.

3. The information processing apparatus according to claim 1,
wherein the adjustment component is a slider.

4. The information processing apparatus according to claim 3,
wherein the slider has a bar shape.

5. The information processing apparatus according to claim 4,
wherein the control unit performs control to perform overlap display of the slider over at least half or more of a width of the waveform display area.

6. The information processing apparatus according to claim 3,
wherein the slider has a circular shape.

7. The information processing apparatus according to claim 1,
wherein the parameter adjustment processing includes adjustment of the parameter, including at least volume of the sound source data and intensity of reverb of the sound source data.

8. The information processing apparatus according to claim 7,
wherein the control unit performs control to selectively display, on the display unit, a type of a parameter, including the sound volume and the intensity of the reverb, by using at least one of a tab, a menu, or a pull-down.

9. The information processing apparatus according to claim 1,
wherein the control unit performs display control related to the audio quality enhancement processing and the parameter adjustment processing while performing timing control with the audio quality enhancement processing.

10. The information processing apparatus according to claim 9,
wherein the control unit
notifies the display unit of a progress status of the audio quality enhancement processing during execution of the audio quality enhancement processing, and
when having received a selection operation of the parameter adjustment processing from a user during the notification of the progress status,
the control unit performs control to close the notification of the progress status and display the adjustment component so as to enable adjustment of the parameter only for the sound source data being original sound source data before undergoing the audio quality enhancement processing.

11. The information processing apparatus according to claim 10,
wherein, when having received an operation of canceling the selection of the parameter adjustment processing from the user, the control unit redisplays the notification of the progress status.

12. The information processing apparatus according to claim 10,
wherein, when the parameter adjustment processing is being selected at completion of the audio quality enhancement processing, the control unit suspends a display control of indicating completion of the audio quality enhancement processing, and when having received an operation of canceling the selection of the parameter adjustment processing from a user, the control unit performs display control of indicating completion of the audio quality enhancement processing.

13. The information processing apparatus according to claim 12,
wherein, when performing display control indicating completion of the audio quality enhancement processing, the control unit reflects a result of the adjustment of the parameter performed on the original sound source data, onto the parameter of the sound source data subjected to the audio quality enhancement processing.

14. The information processing apparatus according to claim 1, wherein the apparatus is provided as a mobile apparatus.

15. An information processing method, being a method to be executed by an information processing apparatus, the method comprising:
executing an application having a recording function and an editing function of sound source data;
causing a display unit to display visual information related to the application;
executing audio quality enhancement processing of the sound source data to be subjected to audio quality enhancement when the sound source data to be subjected to audio quality enhancement has been selected by the user via the application,
executing parameter adjustment processing of the sound source data in parallel with the audio quality enhancement processing, and
causing a parameter adjustment component in the parameter adjustment processing to be displayed in a form of an overlap display onto a waveform display area of the sound source data, the area being displayed on the display unit during the execution of the application.

16. A program causing a computer to execute processing comprising:
executing an application having a recording function and an editing function of sound source data;
causing a display unit to display visual information related to the application;
executing audio quality enhancement processing of the sound source data to be subjected to audio quality enhancement when the sound source data to be subjected to audio quality enhancement has been selected by the user via the application,
executing parameter adjustment processing of the sound source data in parallel with the audio quality enhancement processing, and
causing a parameter adjustment component in the parameter adjustment processing to be displayed in a form of an overlap display onto a waveform display area of the sound source data, the area being displayed on the display unit during the execution of the application.
